# EUROPEAN PATENT APPLICATION

(11) **EP 4 279 734 A1**
(43) Date of publication of application: **22.11.2023**
(21) Application number: 22174516.9
(22) Date of filing: 20.05.2022
(51) Int. Cl.: F03D 1/06, B05C 5/02, B05C 11/10

(54) **METHOD OF FORMING A LEADING EDGE PROTECTOR**

(71) Applicant: Siemens Gamesa Renewable Energy A/S, 7330 Brande (DK)
(72) Inventor: Rokohl, Simon Groenlund, 9000 Aalborg (DK)
(74) Representative: SGRE-Association

(57) **Abstract**

The invention describes a method of depositing a leading edge protector (3) onto a leading edge region (R0) of a wind turbine rotor blade (2), which method comprises steps of providing a robotic arm (10) adapted to guide a nozzle (10N); providing a supply of fluid polymer material (M_{fluid}); actuating the robotic arm (10) to guide the nozzle (10N) along a pre-defined trajectory (T) within a deposition region (R0, R1, ..., Rn) while dispensing a predetermined quantity of fluid polymer material (M_{fluid}) within the deposition region (R0, R1, ..., Rn), which deposited fluid polymer material (M_{fluid}) subsequently cures to form the leading edge protector (3). The invention further describes a deposition apparatus (1) adapted to deposit a leading edge protector (3) onto a leading edge region (R0) of a wind turbine rotor blade (2).

## Description

During operation of a wind turbine, the leading edges of the rotor blades can be damaged by impact with air-borne particles such as hail, sleet, ice, sand, etc. The risk of impact damage increases towards the rotor blade tip since angular velocity increases with increasing distance from the hub. The tip of a long wind turbine rotor blade can reach a velocity in excess of 300 km per hour.

Damage to the leading edge can be in the form of pits, cracks, fissures etc. The resulting unevenness in the surface of the LEP can have a detrimental effect on the aerodynamic flow of air over the airfoil. A reduction in aerodynamic performance is related to a reduction in annual energy production of the wind turbine. For these reasons, a wind turbine rotor blade is generally provided with some form of leading edge protection.

Since the inboard region of a wind turbine rotor blade is less susceptible to leading edge impact damage on account of the lower angular velocities, an LEP is generally provided for the outboard portion of the rotor blade, for example along the leading edge in the outer half of the rotor blade.

A leading edge protector (LEP) can be realized in various different ways, and should generally fulfil a number of conditions. For example, an LEP must reliably adhere to the rotor blade during its lifetime. Furthermore, the long edges of an LEP should transition smoothly to the pressure side and suction side surfaces of the rotor blade. Another requirement is that the LEP should contribute to the overall airfoil shape of the rotor blade.

These conditions are difficult to fulfil with the known methods of providing leading-edge protection to wind turbine rotor blades. For example, in one approach, one or more layers of adhesive tape can be applied along the leading edge of the rotor blade. However, it is difficult to apply the tape without any wrinkles or other surface inconsistencies, and to ensure the complete absence of trapped air bubbles under a layer of tape. In another approach, an LEP "shell" can be injection-moulded using a suitable polymer. One or more LEP shells, each with a length of 1 or more metres, are glued to the rotor blade leading edge. However, several dedicated moulds may be required for each rotor blade design if the shells are to correctly fit about the leading edge. This is a problem particularly in the case of rotor blades that are manufactured to have an upwind curvature or "pre-bend", since the leading edge of such a rotor blade is not straight, but exhibits a degree of curvature especially in the outboard region.

Another problem with the known technique of mounting a row of prefabricated LEP shells to the rotor blade is the need to ensure the absence of gaps between adjacent shells, and to avoid "steps" or overlap between adjacent shells. A satisfactory result is time-consuming and costly to achieve, requiring expertise from trained technicians. Another problem with the known approach is that it is difficult to ensure a homogenous adhesive layer between the rotor blade and an LEP shell, i.e. an adhesive layer without cavities or trapped air bubbles, since such faults can, later on, lead to partial or complete detachment of an LEP shell. The known approaches can therefore lead to expensive repair and maintenance procedures during the lifetime of the wind turbine, and associated downtime and revenue loss.

It is therefore an object of the invention to provide a more economical way of providing satisfactory leading edge protection for a wind turbine rotor blade.

This object is achieved by the claimed method of depositing a leading edge protector onto a rotor blade; and by the claimed deposition apparatus.

### Description

According to the invention, the method comprises steps of providing a robotic arm adapted to guide a nozzle; providing a supply of fluid polymer material; actuating the robotic arm to guide the nozzle along a pre-defined trajectory within a deposition region while dispensing - directly onto the rotor blade - a predetermined quantity of fluid polymer material within the deposition region. The deposited material is then allowed to cure, thus forming a leading edge protector directly on the rotor blade.

An advantage of the inventive method is that the entire LEP is formed seamlessly. With the inventive method, a long LEP can be formed on a long rotor blade, without any interruptions along the length of the LEP. The procedure can be carried out as an automated process, so that significant cost savings can be achieved. Furthermore, by directly forming the LEP on the rotor blade, the inventive method avoids the problems known from the prior art, i.e. problems arising from imperfections in an adhesive layer. The inventive method therefore provides a way of achieving consistent aerodynamic performance of a rotor blade equipped with leading edge protection.

According to the invention, the deposition apparatus is adapted to deposit a leading edge protector onto a leading edge region of a wind turbine rotor blade, and comprises a robotic arm adapted to guide a nozzle; a supply of fluid polymer material; and a controller configured to actuate the robotic arm to guide the nozzle along a pre-defined trajectory within a deposition region and to actuate a dispenser to dispense a predetermined quantity of fluid polymer material onto the deposition region. The term "deposition region" shall be understood as the geometrical area onto which a layer of fluid polymer material is to be deposited while building up the LEP.

An advantage of the inventive apparatus is that it can be configured to perform the method steps in a systematic and methodical manner, gradually building up the LEP layers at a suitable rate. Since a robotic arm can operate essentially without interruption, and since the desired layer thicknesses can be obtained with very favourable precision, the resulting protective coating or LEP can be formed to have a very favourable aerodynamic shape, regardless of the complexity of the rotor blade's leading edge curvature.

The object of the invention is also achieved by a computer program product with a computer program that is directly loadable into the memory of a controller of the deposition apparatus, and which comprises program units to perform the steps of the inventive method when the program is executed by the controller.

Particularly advantageous embodiments and features of the invention are given by the dependent claims, as revealed in the following description. Features of different claim categories may be combined as appropriate to give further embodiments not described herein.

The geometric leading edge of a wind turbine rotor blade is the line or junction between the suction side and the pressure side. In the following, it may be assumed that the leading edge region has the shape of an elongated rectangle extending some distance on either side of the leading edge. The length of a leading edge region can comprise any suitable fraction of the rotor blade span, for example up to 40% of the total span. A leading edge region can extend between any two suitable points along the rotor blade span, and may extend to the outermost tip of the rotor blade. Equally, a leading edge region may terminate at some distance inward from the outermost tip.

The inventive method is essentially a way of "3D-printing" an LEP directly onto a wind turbine rotor blade. The terms "3D-printing" and "additive manufacturing" shall be understood to be synonyms and may be used interchangeably herein. In the following, without restricting the invention in any way, it may be assumed that the inventive method deploys a fused filament technique.

In a fused filament additive manufacturing technique, the fluid polymer material is a filament of softened or molten thermoplastic feedstock. The thermoplastic feedstock can be any of: an aliphatic polyamide such as nylon, a high-impact polystyrene (HIPS), acrylonitrile butadiene styrene (ABS), a thermoplastic polyurethane (TPU), polyethylene terephthalate (PET), polylactic acid (PLA), polyethylene terephthalate glycol (PETG), etc. In one exemplary embodiment of the deposition apparatus implementing a fused filament additive manufacturing technique, a motor-driven unit pulls feedstock material from a spool and pushes it into a liquefier. The liquefier comprises a heating chamber that melts the feedstock, which then exits though the nozzle. The rate of deposition can be adjusted by adjusting the stepper motor speed and/or adjusting the temperature in the heating chamber and/or choosing an appropriate nozzle thickness.

Since the LEP is built up in a sequence of layers, and since the shape of the LEP is ideally a continuation of the rotor blade's airfoil shape, the surface area of a deposition region will generally be smaller than the surface area of the preceding deposition region.

To deposit a uniform layer thickness of fluid polymer material onto a deposition region, the nozzle is preferably held at a consistent or uniform distance from the underlying surface, and is preferably held at a right angle to the underlying surface. However, the deposition region can have a complex shape, i.e. a rectangular area that is curved about the leading edge. In particular towards the rotor blade tip, the radius of curvature at the leading edge is generally very small, requiring the nozzle to change position through almost 180°. Further complexity may arise from a pre-bend curvature of the rotor blade, or a swept shape in the tip region. As the LEP is built up, the surface profile in the leading edge region changes further. The inventive deposition apparatus provides a way of deploying an additive manufacturing technique to deposit fluid polymer material about the complex surface about a rotor blade leading edge by controlling the robotic arm to take into account the initial complex shape, and any subsequent alterations to that shape. To this end, in a preferred embodiment of the invention, the deposition apparatus comprises a number of distance sensors, each directed towards the rotor blade and arranged to measure distance between a reference point and the underlying surface. The measurements delivered by the distance sensor(s) can be evaluated by the controller, allowing this to "track" the growing leading edge contour. With this information, the controller can always orient the nozzle correctly relative to the underlying surface.

In a preparatory step, the controller may "sweep" the robotic arm over the entire spanwise length and chordwise width of the deposition area to obtain an initial map of the deposition area. This "map" can be used as a basis from which all further position adjustments are made as the layers are built up. In a preferred embodiment of the invention, such a "map" is initially compiled for a specific type of rotor blade, and is then used as a basis for "printing" an LEP onto a series of such rotor blades.

Preferably, the deposition apparatus comprises a displacement means adapted to effect a displacement of the robotic arm relative to the rotor blade. In one preferred embodiment of the invention, the deposition apparatus is moveably mounted to the rotor blade, for example by using suction feet and/or a clamp arrangement. Such a displacement means may comprise a motor-driven vacuum apparatus for suction feet, a motor-driven hydraulic clamp arrangement, or any suitable actuators. Equally, a displacement means may comprise an arrangement of wheels, rollers, tracks or other guides to support the deposition apparatus. The displacement means permits motion of the deposition apparatus along the relevant region of the rotor blade. In an alternative approach, a gantry can be arranged about the rotor blade, and the robotic arm may be suspended from the gantry. The displacement means can be configured to allow back-and-forth motion of the robotic arm both laterally, i.e. in a chord-wise direction, and also longitudinally, i.e. in a span-wise direction. Vertical supports of the gantry can be configured to allow vertical displacement of the gantry.

The fluid material may be quite liquid as it exits the nozzle, and may flow some distance under the influence of gravity. Therefore, in a preferred embodiment of the invention, the method comprises an initial step of arranging the wind turbine rotor blade with its leading edge pointing upwards. With the rotor blade held in this way, any spread of the fluid material is not confined to one side of the airfoil but can spread in a more balanced manner.

In a particularly preferred embodiment of the invention, the wind turbine rotor blade is held with its leading edge pointing essentially upwards, but with the chord plane at a slight angle to encourage flow of the molten material towards a specific side of the rotor blade airfoil. For example, it may be desired to shape the LEP to have a greater thickness towards the front of the pressure side, since the rotor blade will - over most of its operation - be angled slightly upwards relative to the incoming airflow (the "angle of attack"). A slightly thicker LEP in the region that is most exposed to the incoming airflow can prolong the useful lifetime of the rotor blade. The average angle of attack is not necessarily the same over the entire length of the rotor blade, but may be a function of distance (spanwise position) along the rotor blade. Therefore, in a preferred embodiment of the invention, the method comprises an initial step of estimating the angle of attack at various spanwise positions along the rotor blade. During the LEP deposition procedure, the rotor blade can be turned about its longitudinal axis to adjust the orientation of the local chord plane. To this end, the root end of the rotor blade may be rotatably mounted in a holding apparatus, and the airfoil of the rotor blade may be supported by one or more rotatably mounted airfoil clamps. Control of these rotatably mounted holding means is preferably synchronized with operation of the robotic arm.

The LEP is preferably built up by applying successive layers of thinly-deposited fluid material. The fluid material exits the nozzle in a thin stream or "bead", which adheres to the rotor blade surface. Therefore, in a preferred embodiment of the invention, the pre-defined trajectory comprises an uninterrupted series of path segments extending between opposite sides of a deposition region. For example, the area in which the LEP is to be deposited can have the form of a long and narrow rectangle or ellipse that is "wrapped about" the leading edge of the rotor blade. The length of the deposition region shall be understood to extend in the spanwise direction of the rotor blade, while the width of the deposition region extends from the pressure side to the suction side, following the curvature over the leading edge of the rotor blade.

Initially, one or more thin layers of fluid material are deposited over the entire LEP area. Consecutive layers will be successively narrower as the LEP is built up, i.e. the width of the deposition region decreases gradually. In one preferred embodiment of the invention, the predefined trajectory comprises an uninterrupted series of path segments extending between the long sides of the deposition region, e.g. a path segment extends from the long edge of the deposition region on pressure side to the opposing long edge of the deposition region on the suction side, as the robotic arm guides the nozzle over the curved leading edge of the rotor blade.

In an alternative approach, a path segment extends from one short edge of the deposition region to the opposite short edge. Each path segment is therefore deposited in a span-wise direction. In this approach, the rotor blade can be turned slowly from an initial position in which the pressure side is facing upwards through to a final position in which the suction side is facing upwards, while the robotic arm is moved back and forth in the spanwise direction to deposit long beads of fluid material in the deposition region.
Of course, a combination of the above approaches may be preferred, so that the LEP is built up by depositing layers of alternating bead directions, i.e. one layer is formed by depositing a beads in the spanwise directions, followed by a consecutive layer formed by depositing beads in the chordwise directions, followed by a consecutive layer formed by depositing a beads in the spanwise directions, etc.

The "trajectory" of the nozzle may be understood as the sequence of path segments between the beginning and end of a deposited bead. Preferably, the pre-defined trajectory is compiled to result in a homogenous layer of fluid material in the deposition region, i.e. the number of path segments may depend on the bead thickness, which in turn may depend on nozzle size, nozzle velocity, mixture viscosity or filament viscosity, feedstock or pump motor speed, etc. Preferably, the method comprises a step of guiding the nozzle at a predetermined velocity relative to the surface of the rotor blade, and the nozzle velocity is chosen on the basis of a desired bead thickness.

In a preferred embodiment of the invention, the robotic arm has multiple degrees of freedom, i.e. the robotic arm is articulated with several joints so that an end effector can be oriented at any desired angle. The robotic arm of the inventive deposition apparatus can be equipped with a single end effector adapted to hold a nozzle at a desired orientation relative to the rotor blade surface. The end effector may be rotatable, for example, or may be arranged at one end of a rotatable joint. The robotic arm may be equipped with several end effectors, each holding a nozzle, each nozzle with a different shape and/or a different cross-sectional area. The nozzles can dispense fluid material simultaneously within the deposition region. Equally, the nozzles can be manipulated separately. One nozzle may serve to apply one or more very thin initial layers over the entire LEP region. This same nozzle, or a nozzle with an appropriately-sized orifice, may then be used to apply further thin layers with decreasing width to start forming the sloping sides of the LEP. A third nozzle with a larger orifice may then be used to build up the final layers of the LEP.

The smoothness of the cured LEP (i.e. the LEP after the deposited material has hardened) may depend to some extent on the bead thickness and nozzle diameter, etc. While it would be possible to configure the apparatus to deposit very thin layers and a resulting smooth outer face on the cured LEP, a similar result may be achieved with thicker layers. For example, the deposition apparatus may be equipped with a further end effector, for example a spreader, that is configured to smoothen the "step" between consecutive layers along the outer edge of the deposition region. In an alternative embodiment, such an end effector may be a directional heat source that can be aimed at the material being extruded from the nozzle. The heat source can re-heat the molten material to delay curing so that this bead of material spreads slightly more. A smoother outer edge of the LEP can be obtained in this manner.

Alternatively, after the LEP has been deposited and has cured, the outer surface of the LEP can be optimized by manually directing a heat source along at the outer edges to soften the material at the surface, which then becomes smoother as the thermoplastic material yields and spreads.

The initial layer can be deposited directly onto the surface of the rotor blade. After moulding a rotor blade, its outer surface may be treated by applying one or more protective coatings such as paint, resin, or any suitable polymer. The material to be deposited in thin fluid layers may be chosen according to its ability to adhere to such a surface coating. However, it may be preferred to form the LEP from a material that is unable to bond with such a surface coating. Therefore, in a further preferred embodiment of the invention, the method comprises a preparatory step of arranging a thin sheet of thermoplastic material onto the leading edge region prior to deposition of the molten thermoplastic. A sheet of thermoplastic material or "hot-melt sheet" can be made of a suitable polyester, polyurethane or other adhesive. The hot-melt sheet can be softened by a directional heat source (held for example by an end effector of the robotic arm) immediately before depositing a bead of fluid material, during deposition of a bead, or immediately after deposition of a bead.

The controller of the deposition apparatus preferably comprises a number of suitable control modules configured to synchronise at least the following: control of the displacement means to move the robotic arm to a desired position; speed of material feed; temperature and/or viscosity of the fluid material; movement of the nozzle along the bead trajectory; exchange of nozzles according to desired bead thickness; etc. If the apparatus deploys a directional heat source to soften a hot-melt sheet or the cured edges of the LEP, the controller preferably also synchronizes the operation of such a heat source. If the rotor blade is rotatably mounted at its root end, the controller also preferably synchronizes rotation of the rotor blade about its longitudinal axis according to the stage of LEP deposition.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a simplified schematic of an embodiment of the inventive deposition apparatus 1;
Figure 2 shows a further embodiment of the inventive deposition apparatus 1;
Figures 3 and 4 illustrate stages in an embodiment of the inventive method;
Figures 5 and 6 illustrate stages in an embodiment of the inventive method;
Figure 7 shows a further exemplary embodiment of the inventive deposition apparatus;
Figure 8 and Figure 9 show embodiments of a leading edge protector obtained by the inventive method;
Figure 10 illustrates a further exemplary embodiment.

In the diagrams, like numbers refer to like objects throughout. Objects in the diagrams are not necessarily drawn to scale.

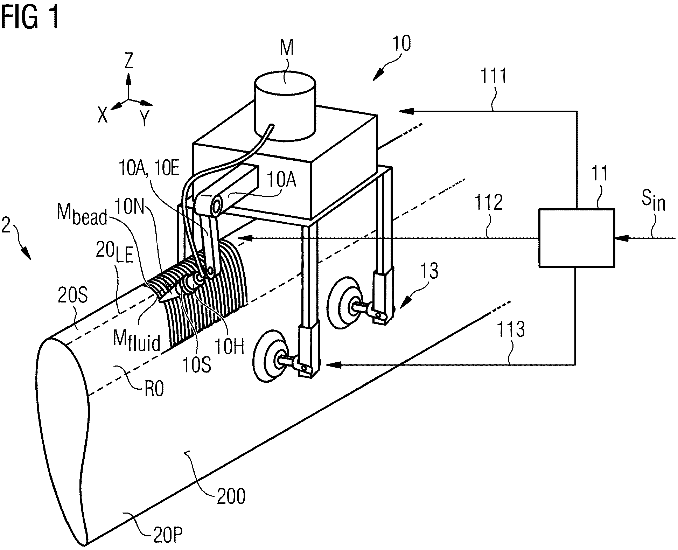

Figure 1 shows a simplified schematic of an embodiment of the inventive deposition apparatus 1 in place over a wind turbine rotor blade 2. The deposition apparatus 1 will be operated to deposit a leading edge protector onto the leading edge region R0 using an additive manufacturing technique. The diagrams shows a robotic arm 10 with multiple arm joints 10A, and an end effector 10E that is adapted to hold and guide a nozzle 10N. The diagram also shows a dispensing assembly comprising a stepper motor 10M and a heater 10H, and a feedstock of thermoplastic material M. The motor can for example turn a spool to push filament feedstock M into the heater 10H. The heater heats the thermoplastic material to soften it, so that it can be pushed or extruded as a bead M_{bead} through the nozzle 10N.

A controller 11 (shown here conceptually as a block) actuates the robotic arm 10 to guide the nozzle 10N along a pre-defined trajectory within a deposition region R0 and to actuate components of the dispensing assembly so that a continuous bead of molten polymer material Mₘₒₗₜₑₙ is deposited onto the rotor blade surface 200. To this end, control modules of the controller 11 issue control signals 111 to the dispensing assembly; control signals 112 to the arm joints 10A, end effector 10E and nozzle 10N; and control signals 113 to the displacement means 13.

The diagram also indicates a number of distance sensors 10S. In this exemplary embodiment, sensors 10S are arranged in line with the nozzle 10N to monitor distance of the nozzle 10N to the rotor blade surface 200. Of course, sensors can be arranged at any appropriate positions. The measurements Sᵢₙ from one or more distance sensors 10S are evaluated by the controller 11, which can adjust the position of the robotic arm 10, the orientation of the end effector 10E holding the nozzle 10N, the rate of motion of the nozzle 10N, etc.

In this embodiment, the deposition apparatus 1 is mounted on the rotor blade 2 and secured to the rotor blade surface 200 using an arrangement of jointed suction feet of a displacement means 13. These can be operated by the controller 11 to move the robotic arm 10 in a span-wise direction and/or a chordwise direction, as required. Such position adjustments may be required whenever the robotic arm 10 is finished depositing material within its action radius.

The assembly of such a jointed apparatus will be known to the skilled person and need not be discussed in detail herein. During deposition of the molten feedstock, the robotic arm 10 is actuated to maintain a perpendicular orientation of the nozzle 10N relative to the surface 200 of the rotor blade 2. A favourably precise motion of the robotic arm can be achieved by a suitable number of rotary joints between arm segments 10A.

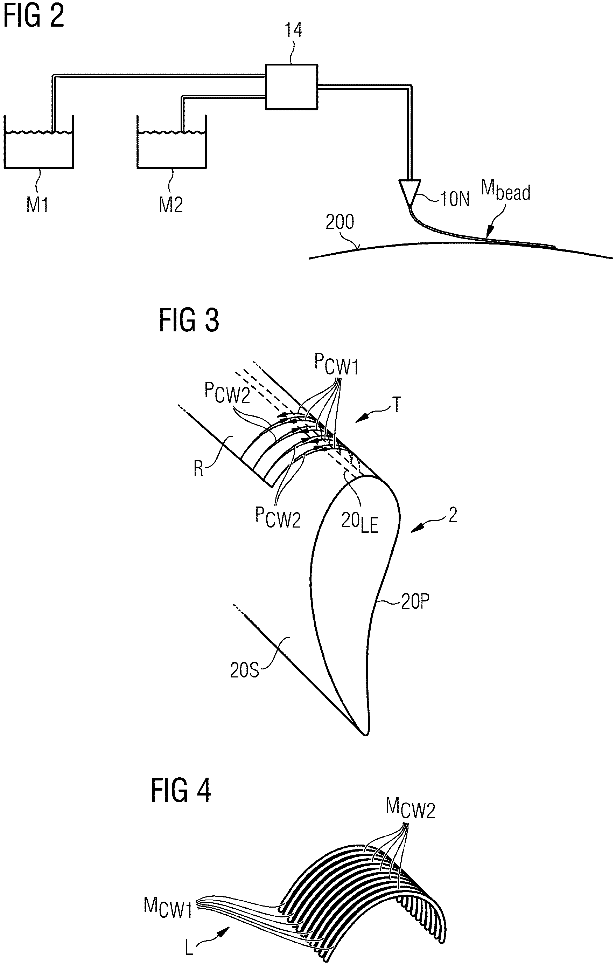

Figure 2 shows a further realisation of the invention. The deposition apparatus 1 is similar to the apparatus shown in Figure 1. Here, instead of unspooling a thermoplastic feedstock and melting it, the material to be deposited is mixed by combining two components M1, M2 of an epoxy, polyurethane or any other two-component coating. The components are provided in reservoirs, and a mixing unit 14 is configured to mix appropriate quantities and to feed the mixture to the nozzle 10N. The nozzle 10N may be assumed to be held by an end effector of a robotic arm (not shown) as explained in Figure 1.

Figure 3 shows an exemplary trajectory T during the deposition procedure. Here, within an elongate rectangular deposition region R, the trajectory T comprises consecutive chord-wise path segments P_{CW1}, P_{CW2}, i.e. the nozzle 10N is guided back and forth in a chordwise direction between pressure side 10P and suction side 20S, forming a layer of parallel beads M_{CW1}, M_{CW2} that extend in a chordwise direction on either side of the leading edge 20LE. Figure 4 shows the resulting layer L of parallel beads M_{CW1}, M_{CW2} (the bead thickness is greatly exaggerated in the diagram).

The elongate rectangular deposition region R can define any one of the LEP layers. A deposition region R can have a length of many metres, for example 25 m in the case of a 100 m rotor blade. The width of the widest deposition region, i.e. the width of the first LEP layer, can be in the order of 10 cm on either side of the leading edge, i.e. on either side of the junction between pressure side and suction side. In an exemplary embodiment, the thickness of the "printed" or deposited LEP can vary from less than 0.1 mm along an outer edge to a height of 3 mm along the junction between pressure side and suction side. In the first layer, therefore, each bead M_{CW1}, M_{CW2} extends over a length of about 20 cm and the thickness of each bead is at most 0.1 mm. As the layers are built up, the bead lengths become shorter, and the bead thickness may gradually increase larger (by appropriate choice of nozzle orifice).

Of course, the shape and form of the deposited LEP may be planned according to the rotor blade geometry and the meteorological conditions at the intended installation site.

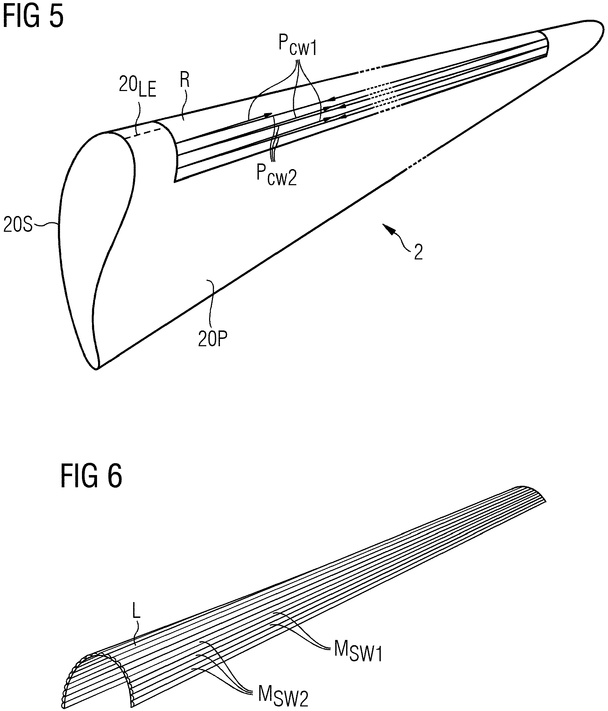

Figure 5 shows a further exemplary trajectory T during the deposition procedure. Here, the trajectory T comprises consecutive span-wise path segments P_{SW1}, P_{SW2}, i.e. the nozzle 10N is guided back and forth in a span-wise direction parallel to the leading edge 20LE, forming a layer L of long parallel beads M_{SW1}, M_{SW2}. Figure 6 shows the resulting layer L (again, the bead thickness is greatly exaggerated in the diagram).

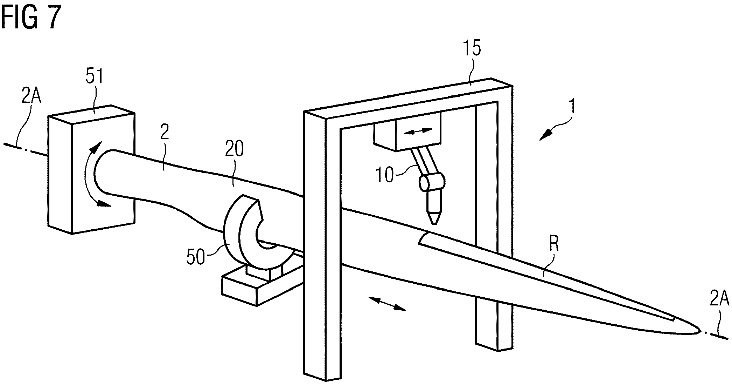

Figure 7 shows a further exemplary embodiment. Here, the displacement means of the deposition apparatus 1 comprises a gantry 15 in place over a rotor blade 2. The gantry can move in a spanwise direction. The robotic arm 10 can move laterally along the gantry's overhead bridge. The diagram also shows a holding arrangement 50, 51 for holding the rotor blade during the deposition procedure. Here, the rotor blade airfoil 20 is supported by one or more rotatable airfoil clamps 50, and the circular root end 21 is held by a rotatable root end frame 51. This holding arrangement allows the rotor blade 2 to be turned about its longitudinal axis 2A, so that part of a deposition region can be presented optimally to the robotic arm, even when the leading edge has a relatively small radius of curvature. Of course, instead of rotating the rotor blade 2, the deposition apparatus 1 and displacement means can be constructed to permit the robotic arm 10 to move in such a way that the nozzle 10N can be guided about the leading edge curvature.

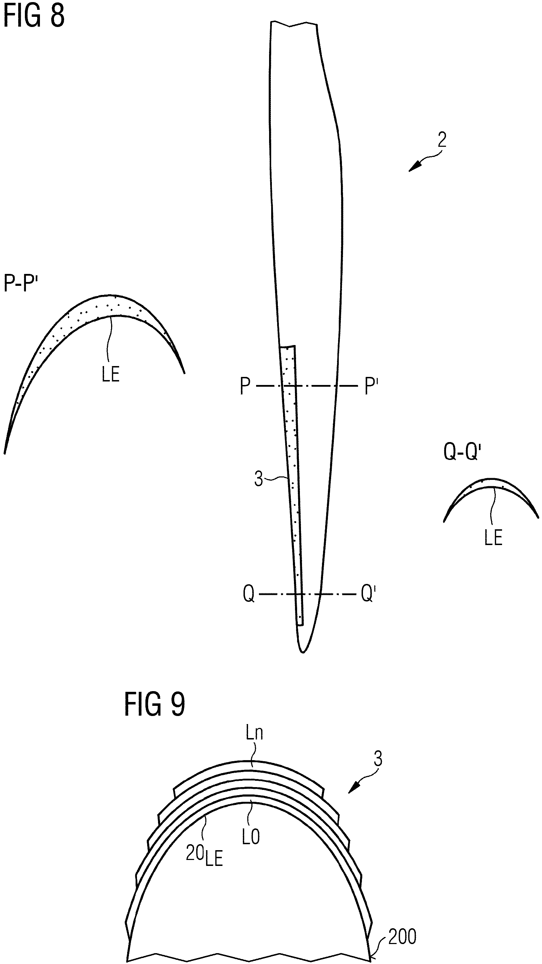

Figure 8 shows the cured leading edge protector 3 and indicates two cross-sections, each from opposite ends of the LEP 3. The cross-sections show the different shapes of the LEP according to the spanwise position along the rotor blade. In a more inboard region, the LEP 3 can have an asymmetrical shape, since the pressure side receives more exposure to impact from airborne particles. The LEP 3 comprises numerous thin layers L0, L1, ..., Ln of cured material, as shown in Figure 9. Each layer thickness corresponds essentially to the thickness of the bead dispensed by the nozzle 10N during the deposition procedure. The widths of the successive layers L0, L1, ..., Ln depend on the spanwise position. The widths of the successive layers L0, L1, ..., Ln decrease gradually according to distance outward from the rotor blade surface 200. Here, the outer edges of the LEP 3 may exhibit small "steps" between the successive layers. These can be smoothened by reheating the thermoplastic material and allowing it to spread, thereby evening out the steps.

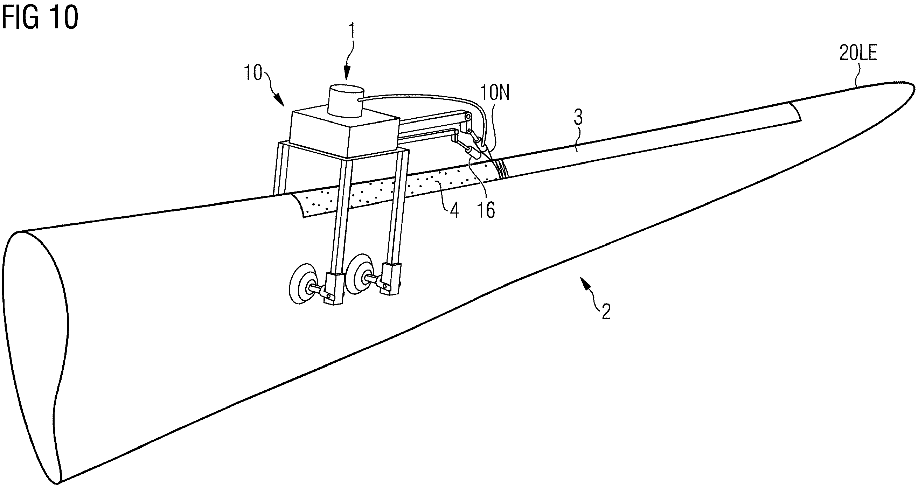

Figure 10 illustrates a further exemplary embodiment, in which a hot-melt sheet 4 is initially applied to the leading edge region R0. The first LEP layer L0 is deposited as described above, for example in short path segments extending on either side of the leading edge 20LE. Here, the robotic arm 10 is equipped with a further end effector 10E configured to aim a directional heat source at the hot-melt sheet, which melts to bond the deposited layer L0 to the rotor blade surface 200. The remaining LEP layers L0, L1, ..., Ln are built up as described above.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method of depositing a leading edge protector (3) onto a leading edge region (R0) of a wind turbine rotor blade (2), which method comprises steps of
- providing a robotic arm (10) adapted to guide a nozzle (10N);
- providing a supply of fluid polymer material (M_{fluid});
- actuating the robotic arm (10) to guide the nozzle (10N) along a pre-defined trajectory (T) within a deposition region (R0, R1, ..., Rn) while dispensing a predetermined quantity of fluid polymer material (M_{fluid}) within the deposition region (R0, R1, ..., Rn), which deposited fluid polymer material (M_{fluid}) subsequently cures to form the leading edge protector (3).

2. A method according to the preceding claim, wherein the pre-defined trajectory (T) is compiled to result in a homogenous layer (L0, L1, ..., Ln) of deposited material in the deposition region (R0, R1, ..., Rn).

3. A method according to any of the preceding claims, wherein a path segment (P_{SW1}, P_{SW2}; P_{CW1}, P_{CW2}) of the pre-defined trajectory (T) extends between the suction side (20S) of the rotor blade and the pressure side (20P) of the rotor blade.

4. A method according to any of the preceding claims, comprising steps of calculating a nozzle velocity (v 10N) to achieve a desired material deposition, and moving the nozzle (10N) at the calculated velocity (v_10N) relative to the surface (200) of the rotor blade (2).

5. A method according to any of the preceding claims, wherein the robotic arm (10) comprises a rotatable end effector (10E) adapted to hold a nozzle (10N).

6. A method according to any of the preceding claims, wherein the robotic arm (10) is actuated to maintain a perpendicular orientation of the nozzle (10N) relative to the surface (200) of the rotor blade (2).

7. A method according to any of the preceding claims, wherein the fluid polymer material (M_{fluid}) is provided as a filament of softened thermoplastic feedstock (M).

8. A method according to any of the preceding claims, comprising a preparatory step of arranging a sheet (4) of thermoplastic material onto the leading edge region (R0) prior to deposition of the fluid polymer material (M_{fluid}).

9. A method according to the preceding claim, wherein the pre-defined trajectory (T) comprises an uninterrupted series of path segments (P_{SW1}, P_{SW2}; P_{CW1}, P_{CW2}) extending between opposite sides of a deposition region (R0, R1, ..., Rn).

10. A method according to any of the preceding claims, comprising a step of rotating the rotor blade (2) about its longitudinal axis (2A) during the material deposition procedure.

11. A deposition apparatus (1) adapted to deposit a leading edge protector (3) onto a leading edge region (R0) of a wind turbine rotor blade (2), comprising
- a robotic arm (10) adapted to guide a nozzle (10N);
- a supply of fluid polymer material (M_{fiuid}); and
- a controller (11) configured to actuate the robotic arm (10) to guide the nozzle (10N) along a pre-defined trajectory (T) within a deposition region (R0, ..., Rn) and to actuate a dispensing assembly (10M, 10H) to dispense a predetermined quantity of fluid polymer material (M_{fluid}) onto the deposition region (R0, R1, ..., Rn).

12. A deposition apparatus according to the preceding claim, comprising a number of distance sensors (10S) arranged to measure distance to the rotor blade surface (200).

13. A deposition apparatus according to claim 11 or claim 12, comprising a displacement means (13) adapted to effect a displacement of the robotic arm (10) and/or the nozzle (10N).

14. A deposition apparatus according to any of claims 11 to 13, wherein the controller (11) is configured to control the displacement means (13).

15. A computer program product comprising a computer program that is directly loadable into a memory of a controller (11) of a deposition apparatus (1) according to any of claims 11 to 14, and which comprises program elements for performing steps of the method according to any of claims 1 to 10 when the computer program is executed by the controller (11).
